# EUROPEAN PATENT SPECIFICATION

(11) **EP 1 076 852 B1**
(45) Date of publication and mention of the grant of the patent: **04.06.2003**
(21) Application number: 99919404.6
(22) Date of filing: 29.04.1999
(51) Int. Cl.: G06F 9/46

(54) **REMOTE COMPUTING**
ENTFERNTE RECHNERBEARBEITUNG
TELETRAITEMENT

(30) Priority: 13.05.1998 GB 9810279; 29.10.1998 GB 9823714
(43) Date of publication of application: 21.02.2001
(73) Proprietor: BRITISH TELECOMMUNICATIONS public limited company, London EC1A 7AJ (GB)
(72) Inventor: GHANEA-HERCOCK, Robert, Alan, Ipswich IP3 8JJ (GB); COLLIS, Jaron, Clements, Nr. Ipswich, Suffolk IP5 2TX (GB)
(74) Representative: Dutton, Erica L. G.
(86) International application number: GB9901329
(87) International publication number: WO99059062

(56) References cited:
- BERGHOFF J ET AL: "Agent-based configuration management of distributed applications" PROCEEDINGS. THIRD INTERNATIONAL CONFERENCE ON CONFIGURABLE DISTRIBUTED SYSTEMS (CAT. NO.96TB100046), PROCEEDINGS OF INTERNATIONAL CONFERENCE ON CONFIGURABLE DISTRIBUTED SYSTEMS, ANNAPOLIS, MD, USA, 6-8 MAY 1996, pages 52-59, XP002086942 ISBN 0-8186-7395-8, 1996, Los Alamitos, CA, USA, IEEE Comput. Soc. Press, USA
- OBJETCSPACE INC.: OBJECTSPACE VOYAGER CORE PACKAGE TECHNICAL OVERVIEW, December 1997 (1997-12), XP002086943 http://www.objectspace.com/developers/whit e/VoyagerTechOview.pdf
- VOGLER H ET AL: "Using multiple mobile agents for distributed transactions" PROCEEDINGS. 3RD IFCIS INTERNATIONAL CONFERENCE ON COOPERATIVE INFORMATION SYSTEMS (CAT. NO.98EX122), PROCEEDINGS OF THIRD IFCIS CONFERENCE ON COOPERATIVE INFORMATION SYSTEMS (COOPIS'98), NEW YORK, NY, USA, 20-22 AUG. 1998, pages 114-121, XP002086944 ISBN 0-8186-8380-5, 1998, Los Alamitos, CA, USA, IEEE Comput. Soc, USA

## Description

This invention relates to remote computing, and particularly but not exclusively to remote computing using so - called "agents".

It is known to provide software in the form of "mobile agents". Such agents comprise a program which is capable of stopping its execution, converting its code into a serial form suitable for transmission through a transmission medium such as a telecommunications network, and causing the code to be transmitted to another computer, and subsequently to be executed there. Thus, such agents have the appearance of single, mobile entities which can pass from computer to computer. The term "agent" is used with different meanings in different contexts in the art. As used herein, a "mobile agent" refers to a program which can, on receipt of an instruction, move itself to another computer and commence execution there without loss of continuity.

Such mobile agents are described in US 5603031 (White et al) which relates to the "Telescript" language marketed by General Magic Inc., Sunnyvale, California. The "JAVA" computer language consists of code for creating a "Virtual Machine" on any computer, which can run code received via the Internet. Thus, JAVA provides some of the elements necessary for mobile agent computing. More recently, the arrival of JAVA 1.1 and its widespread use in the art have resulted in the development of a number of languages for writing agent programs, and support platforms for supporting agents, which make use of the JAVA language and runtime environment ("virtual machine"), in "beta" or pre release form.

One of these is "VOYAGER", available from OBJECTSPACE Inc., 14901 Quorum Drive, Dallas, Texas TX 75240 USA. VOYAGER is arranged to convert Java code into a form in which it can provide mobile agent programs which can move themselves to another specified computer and re-commence operation there, and includes enhancements such as the ability to terminate such programs automatically. Voyager is available in a Beta 2 version, from ObjectSpace Inc.

Others include the Aglets systems supplied by IBM Inc. Odyssey from General Magic Inc., and Concordia, from Mitsubishi; and others, including the Agent TCL language.

Generally, such mobile agent systems consist of single programs for particular purposes.

Some discussion of Heterogeneous agent design are given in "Agent design patterns: elements of agent application design", Aridor and Lange, to be presented at the Second International Conference on Mobile Agents (Agents '98) in Minneapolis/St. Pauls, 10-13 May 1998, which the present inventors received after the development of the present invention. That paper describes mobile agents having itineraries, specifying a sequence of successive computers to visit. The agents may be in a master/slave relationship. In this case, a "master" agent (which is static) remains at a first site and a "slave" agent visits another site and reports back to the master agent. The slave agent may report by using a "messenger" agent, to carry data to the master agent.

Also briefly mentioned therein. is the possibility of providing an "organised group" of agents which all travel together.

The present invention provides various improvement to existing agent proposals, and may be implemented using one of the above mentioned available agent languages and support platforms.

In one aspect, the present invention provides a method of remote computing comprising supplying a plurality of parallel processing task programs from a first computer to at least one second computer; supplying a coordinating program from said first computer to said second computer; and coordinating operation of the task programs through the coordinating program.

Using a heterogeneous team of agents on the second (remote) computers simplifies the control and communications tasks necessary, since the coordinating program at the remote site can manage local operations of the task programs there, and can act as a communications collection and distribution point for the task programs there, and hence communications with the first (home) computer are reduced.

Other aspects, embodiments and features of the invention will be apparent from the following description and claims.

The invention will now be illustrated, by way of example only, with reference to the accompanying drawings, in which:
Figure 1 is a block diagram showing the elements of a network of remote computers;
Figure 2 is a block diagram showing the elements of one of the remote computers of Figure 1;
Figure 3 is a block diagram showing the programs present in the memory of the computer of Figure 2;
Figure 4 is a block diagram showing the programs present in the network of Figure 1 in a first embodiment of the invention;
Figure 5 is a flow diagram showing the overall operation of an agent control program forming part of Figure 4;
Figure 6a is a flow diagram showing the initial operation part of Figure 5;
Figure 6b is a flow diagram showing the platform creation stage of Figure 5;
Figure 6c is a flow diagram showing the remote computer monitoring stage of Figure 5;
Figure 6d is a flow diagram showing the agent program monitoring stage of Figure 5;
Figure 6e is a flow diagram showing the termination stages of Figure 5;
Figure 7 is a flow diagram showing the operation of a scout agent of Figure 4;
Figure 8 (which comprises Figures 8a to 8e) is a flow diagram showing the operation of a co-ordinating agent of Figure 4;
Figure 9 is a flow diagram showing the operation of a task agent forming part of Figure 4;
Figure 10 is a diagram indicating a first display produced according to the first embodiment; and

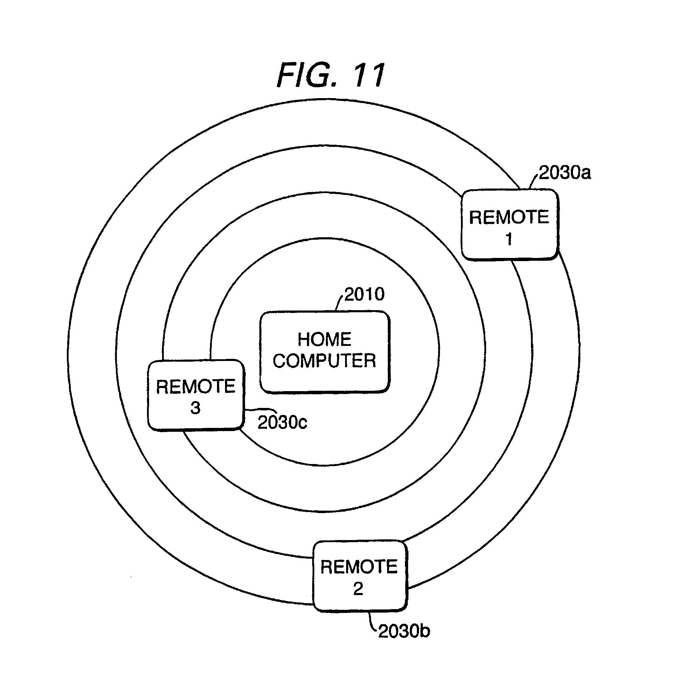

Figure 11 is a diagram indicating a second display produced according to the first embodiment.

### FIRST EMBODIMENT

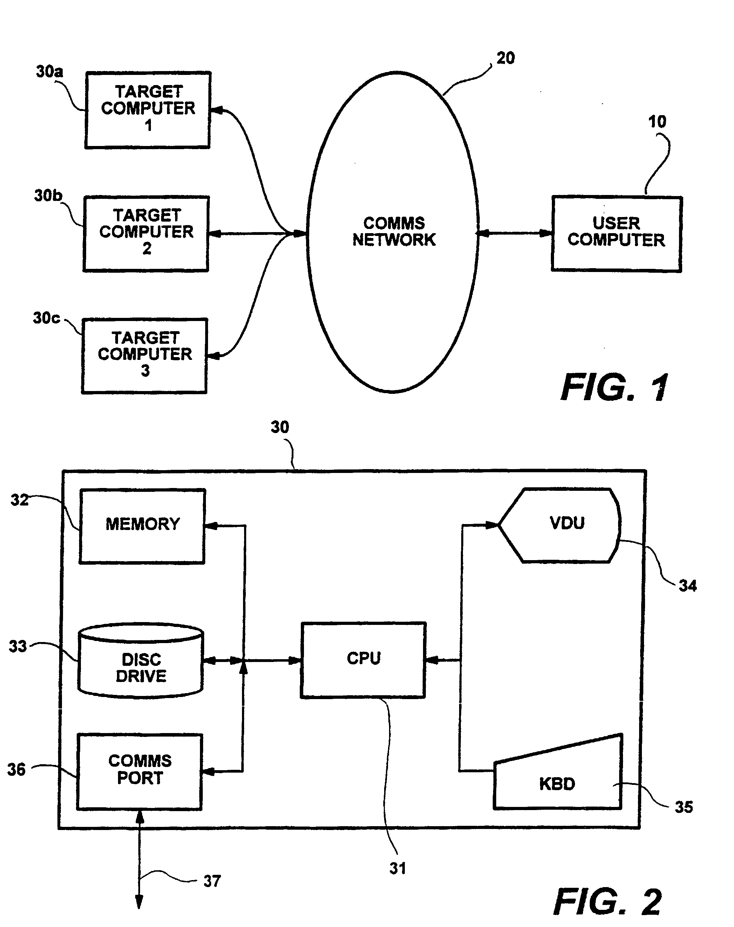

Referring to Figure 1, a network of computers comprises a user computer 10, interconnected via a telecommunications network 20 with a plurality of remote computers 30a, 30b, 30c. The user computer 10 may, for example, comprise a Sun workstation, and the target computers 30a, 30b, 30c may comprise a network server 30a, a workstation 30b, and a laptop personal computer 30c.

Each of the remote computers 30 consists of a central processor unit (CPU), a memory 32, a disc drive 33, a visual display unit (VDU) 34, a keyboard 35, and a communications port 36, coupled to communications channel 37 (such as an ISDN link). These elements are interconnected via a conventional bus structure (not shown).

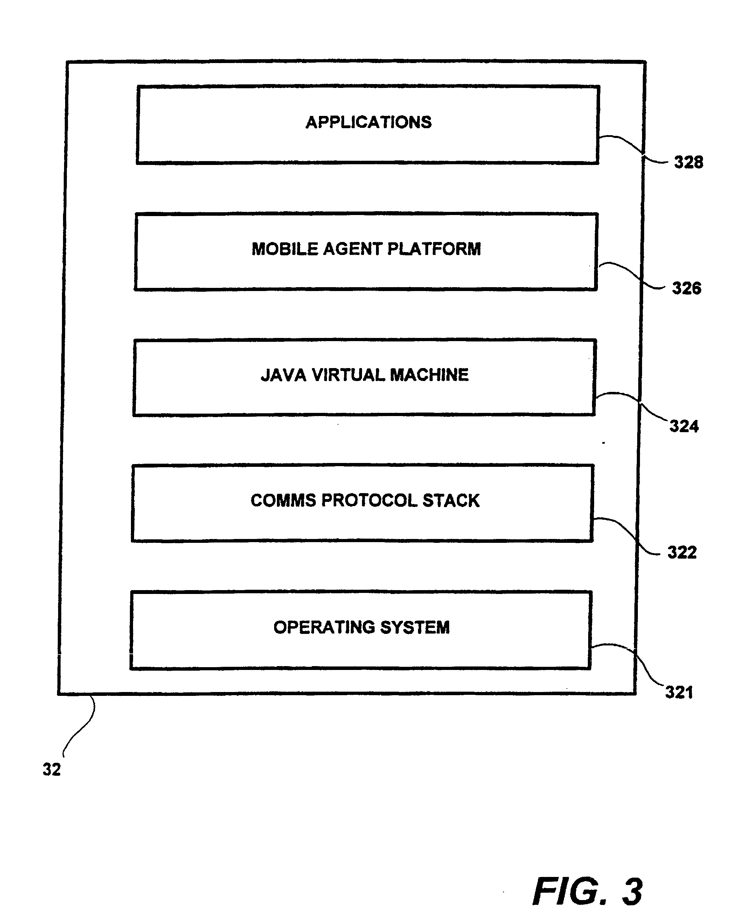

Referring to Figure 3, within the memory 32 of each of the remote computers 30, a plurality of control programs are stored for execution. In this embodiment, these comprise an operating system 321, such as Windows 95 or Windows NT, a communications protocol stack 322 such as TCP/IP, a Java virtual machine 324, and a mobile agent platform 326, such as VOYAGER available from ObjectSpace Inc., which collectively comprise an operating environment for applications programs labelled collectively as 328 in Figure 3. The structure of the user computer 10 generally corresponds to that of the remote computers 30 described with reference to Figures 2 and 3, except insofar as modified as described below.

In use, where serialised code representing a mobile agent program is received through the communications port 37, the mobile agent platform 326 and Java virtual machine 324 cause it to be stored within the applications area 328 of the memory 32. The mobile agent platform 326 then converts the code into local Java code, to run on the Java virtual machine 324 making use of the local operating system 321. General details of the operation of the mobile agent platform 326 and Java virtual machine 324 will be found in the Voyager user guide, version 1.0, Beta 3.0, July 1997, available from OBJECTSPACE Inc. Thus far, the above described system operates in the manner of a conventional mobile agent computing system.

### OVERVIEW OF OPERATION OF FIRST EMBODIMENT

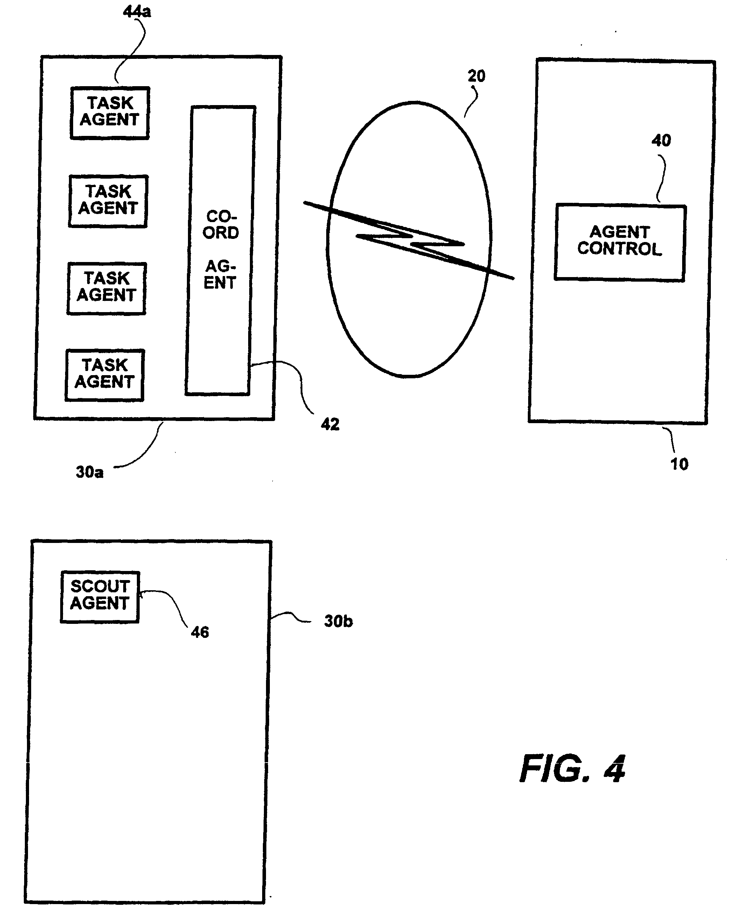

Referring to Figure 4, the software present during run-time operation of the present embodiment will be described.

Within the user computer 10 an agent control program 40 is provided. The agent control program 40 is in communication, via the telecommunications network 20, with a co-ordinating agent program 42 resident on a first target computer 38. Also resident on the first target computer 38 are a plurality of a task agent programs 44a-44d, each of which is arranged to communicate with the coordinating agent program 42.

On a further remote computer 30b, a scout agent program 46 is provided.

In operation, the task agent programs 44a-44d operate to process part of a task in parallel. Typically, all task agent programs 44 will be identical.

The co-ordinating agent program 42 interacts with the operating system 321 of the remote computer 38 on which it is resident. It communicates with the task agent programs 44a-44d via local message passing, and with the control agent control program 40 via messages transmitted through the telecommunications network 20. The Scout agent 46 communicates with the coordinating agent 42 and with the agent control program 40 by sending messages through the network 20.

Thus, to perform some repetitive task requiring a high degree of computing, the task agents 44a-44d each perform a portion of the computing task, in parallel. A co-ordinating agent 42 controls the amount of computing resource used by the task agents on the remote computer 30a. It also communicates the results calculated by the task agents to the agent control program 40. Finally, it decides whether, and when, to move from the remote computer 38 to the further remote computer 30b to re-commence execution there.

The agent control program 40 is permanently operational on the user computer 10 and does not move to remote computers. In operation, it continually monitors the usage and availability of computing resources on the remote computers 30a-30d, by receiving messages from the Scout agent programs 46 and, where necessary, by sending out new Scout agent programs 46 to newly located target computers 30.

Where a user wishes a new task to be performed, the agent control program 40 allows the user to define the task to be performed, and creates a suitable code for task agents 44.

It then determines which of remote computers 30 are suitable for performing the task, and ranks them into a sequence or itinerary. It then creates code for the co-ordinating agent program 42 and transmits this, together with code to enable the creation of the task agent programs 44, to the first remote computer 30a in the itinerary.

When the co-ordinating agent program 42 arrives at the first such remote computer 30a, it creates a plurality of task agent programs 44, and controls their operation in dependence upon the computing resources available at the remote computer 30a. When the resources cease to be suitable, for example because a user of the remote computer 30a has commenced a different task there, the coordinating agent 42 determines a further remote computer 30b to move to (either from the itinerary, or from the reports of the Scout agents 46), and moves itself and the task agents 44 to the remote computer 30 b via the telecommunications network 20.

### OPERATION OF THE AGENT CONTROL PROGRAM 40

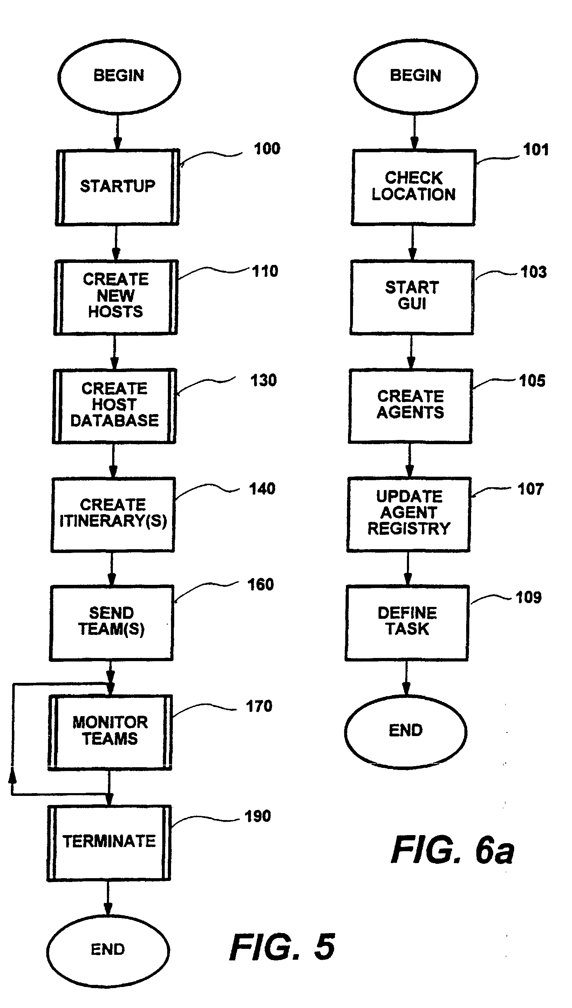

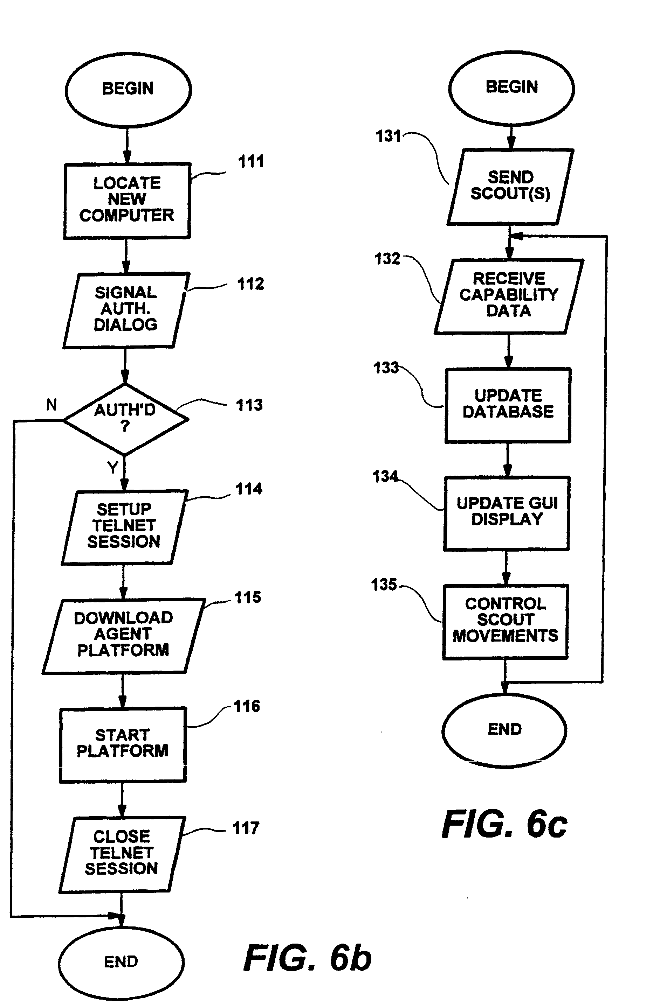

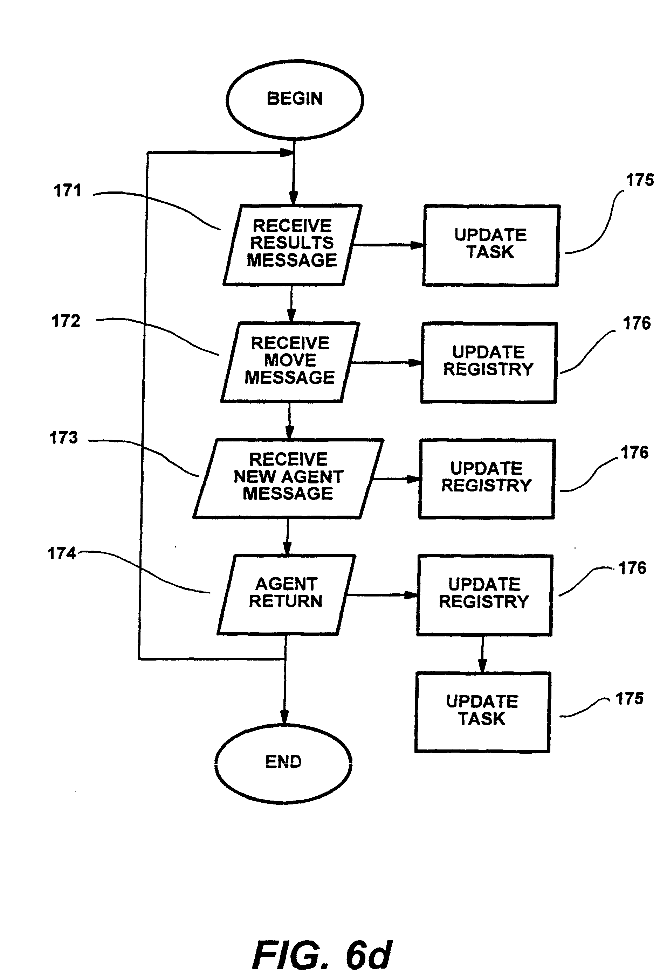

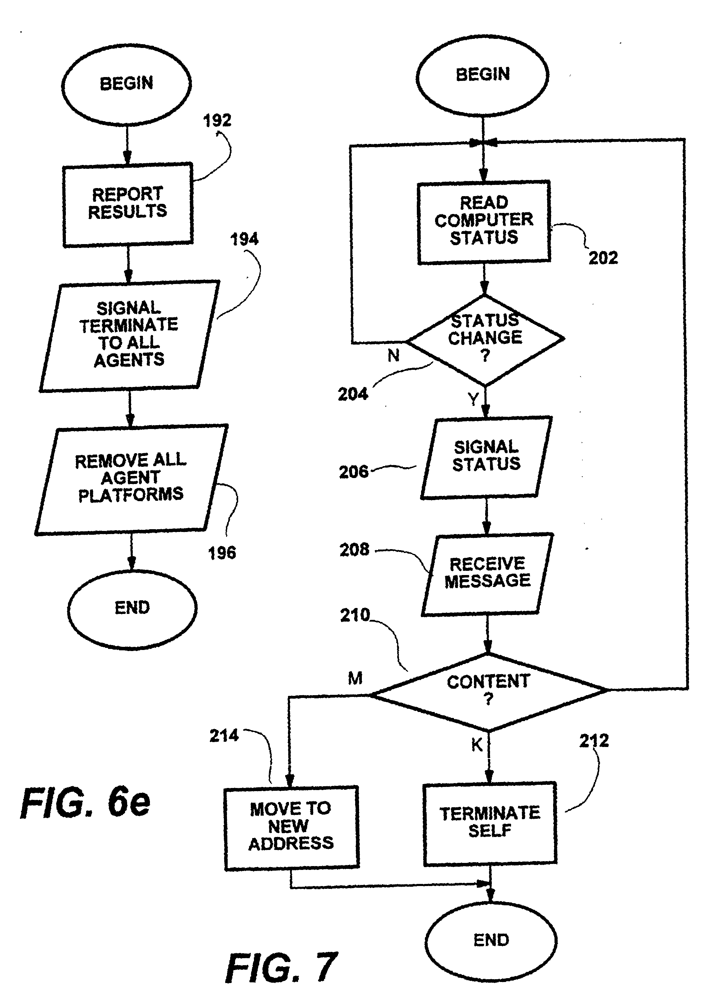

The operation of the agent control programme 40 will now be described with reference to Figures 5 and 6. In a step 110, the user computer 10 starts the agent control programme 40, and initialisation is performed as described in greater detail below in Figure 6a.

In a step 110, new suitable hosts for remote computing are created in the manner described in Figure 6b. In a step 130, a database of available remote computers is created and maintained as described in greater detail below in Figure 6c, and in a step 140, an itinerary of host computers is calculated for the or each agent team which will be created.

In step 160, one or more teams of mobile agents are created and sent to a first computer on each itinerary. In step 170, the agent control programme 40 monitors the creation, termination and movement of the teams, as described in greater detail below in Figure 6d , and in step 190, after the desired task has been completed, the agent control program 40 terminates.

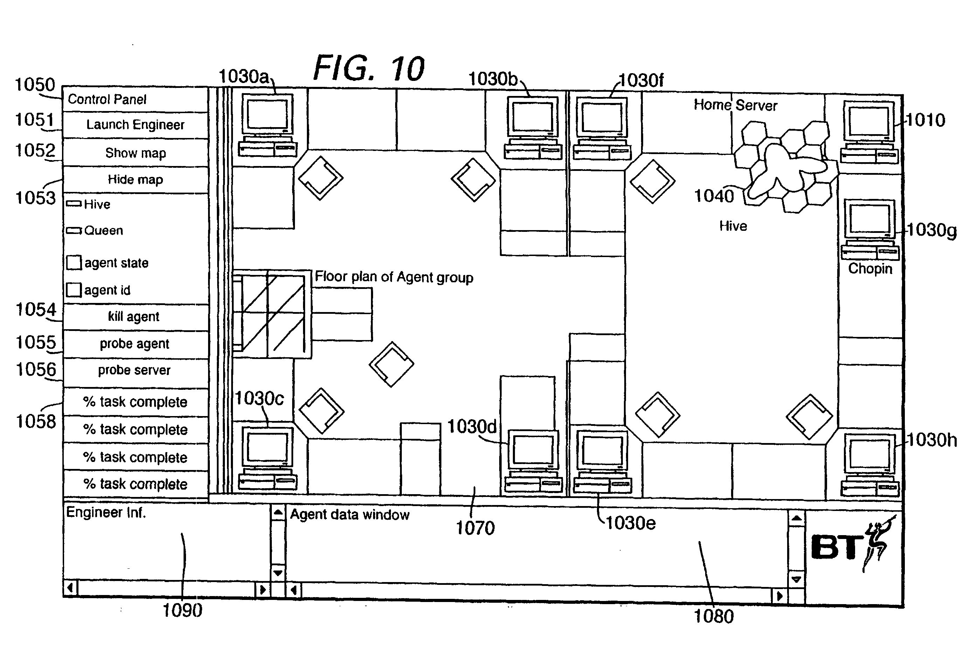

Referring to Figure 6a, initially, in a step 101, the agent control program 40 determines the IP address of the user computer 10. In a step 103, the agent control programme 40 creates a graphical user interface (GUI) including a display, as shown in Figure 10.

In a step 105, the agent control program 40 creates an instance of a scout agent 46, a co-ordinating agent 42 and a task agent 44 and in a step 107, the agent control programme 40 creates and updates a Registry, consisting of a list of all existing agents and their locations (ie the IP addresses of the computers on which they are running).

In a step 109, the agent control program 40 defines the task to be performed, by allowing the user to interact through the GUI, either to select an existing predefined task, or to create a new task by supplying code for execution. Examples of suitable tasks are tasks which need to be performed multiple times, such as exhaustive searches for solutions to equations, or code breaking. One example which has successfully been performed employing this embodiment is a genetic algorithm evaluation.

Referring now to Figure 6b, the step of creating new hosts is performed as follows. In a step 111, remote computers not already carrying an agent platform are located, via the telecommunications network 20, and in step 112, an authentication dialogue is carried out with such computers. If (step 113) the authentication dialogue is successful, then in step 114, a Telnet session is set up to the remote computer 30, and in a step 115, the agent platform (eg a VOYAGER server) is downloaded to the remote computer 30. In a step 116, the agent platform is started on the remote computer 30, and then in step 117, the Telnet session is closed down.

Referring to Figure 6c, the steps performed in creating and updating the database of remote hosts 30 will now be described in greater detail. In step 131, a plurality of scout agents 46 are created, and each is sent to a respective one of the remote computers 30a-30d. In sending each agent, the agent control program 40 sends each agent a message instructing it to move to the IP address of the computer it is to monitor, and updates its registry to indicate that the scout agent has gone to the respective computers.

In a step 132, the agent control program receives a signal from one of the scout agents 46, and in a step 133 updates (or creates, if no signal has previously been received) a database of remote computers 30 comprising, for each remote computer, an indication of the processor type; available memory; computer type (e.g. laptop or desktop); lP address; hard disk size and available space; operating system type; JAVA version number; level of current CPU usage; and any other available data from the scout agent 46. It also includes the geographical location (where known) This may be determined from the IP address, or from data located at the remote computer such as time of day held by the system clock (indicating the latitude) or the phone number (indicating the country and/or area).

In a step 134, the display of Figure 10 is updated to show graphically, in shorthand form, the available capacity on a visual representation of each remote computer 30.

Referring to Figure 10, this display comprises a control panel area 1050 consisting of a number of areas for selection with a "mouse" or other cursor control device by a user and including, in this embodiment, "soft buttons" 1051 for starting a Telnet program to install an new agent server platform; 1052 and 1053 for respectively showing or hiding a map display area 1070 discussed below; 1054 for terminating a selected agent; 1055 for instructing a status reading of a selected agent; and 1056 for instructing a status reading of a selected server. In each case, the agent or server is selected graphically by the user, as discussed below. A status area 1058 shows, for each team, the progress of the task (i.e. as a percentage of the time to completion).

The map display area 1070 alluded to above comprises a map (here, floor plan) of the computing resources in the geographical area of the home server (in this case, in the surrounding rooms). It consists of icons 1030a-1030h each representing one of the remote computers 30a-30c, and an icon 1010 representing the user computer 10. Also present is an icon 1040 indicating the presence of the agent control program 40 on the user computer 10, this being represented by proximity on the screen.

Similarly, although not shown in Figure 10, an icon 1042, 1044, or 1046 representing respectively an agent co-ordinating program 42, task agent 44 or scout agent 46, is shown on the display next to the icon 1030 for the host computer on which the program is currently resident.

In this embodiment, communications between the remote computers 30 and the user computer 10 are graphically represented, by connected lines, the width of which denotes the speed of information transmission.

Also provided within the display of Figure 10 is a data area 1080 for displaying data received from the computing teams, and an agent support platform display area 1090, indicating which computers support platforms have been installed.

The user may select an agent or computer to be interrogated, using a cursor control input device. The display of Figure 10 is implemented using conventional user interface technology, such as the "Windows" operating system.

Preferably, in this embodiment, the agent control program 40 is arranged to generate a periodic TCP/lP "PING" signal, to detect the time delay to each remote computer. The time delay data in this case is stored, for each computer, in the remote computer database, and may be utilised in selecting the itinerary, so as to keep the overall delay low.

In this case, the GUI also includes a display frame showing a "bullseye" or target view, with the user computer 10 central within the view and the remote computers 30 at bearings corresponding to their geographical bearing from the user computer 10, and at distances corresponding to the measured time delays therefrom.

The display consists of an icon 2010 representing the user computer 10, and icons 2030a-2030c each representing one of the remote computers 30a-30c.

In step 135, the agent control program 40 determines whether the scout agent 46 should be moved (for example, where the remote computer 30 is going out of service) and effects any necessary movement instructions. These monitoring and updating steps 132-135 are performed continuously throughout the operation of the agent control program 40, or at periodic intervals. In this embodiment, the scout agents 46 are arranged to terminate themselves on the remote computer 30 on which they are running if they do not, in a predetermined period, receive a message from the agent control program 40.

The step 140 of creating an itinerary will now be discussed in greater detail. Having constructed a database of available host computers, the agent control program 40 proceeds to determine how many agent teams should be created. As an example, it may be assumed that the remote computers 30 comprise a number of relatively powerful network server computers, a number of (less powerful) engineering work stations, a number of (less powerful) personal computers, and a number of laptop computers. On each such remote computer, a number of programs will already be executing, so that the resources available for the task to be performed are constrained, by varying amounts.

The agent control program 40 determines a usefulness factor for each remote computer as the product of an index of the power of the computer (comprising, for example, a weighted sum of its processor speed and available memory), and a fraction of its capacity which is available.

So as to avoid disruptive invasion of remote computers, even where a scout agent 46 reports that almost none of the capacity of a remote computer 30 is being utilised, the agent control program 40 sets a maximum capacity for utilisation (for example, of 50% of the resources of the remote computer).

The index thus calculated for each remote computer thus represents the desirability of the computer for use in solving the task.

Next, the agent control program 40 determines how many teams of agents to establish. For a parallel computing problem, in general, some performance benefit is gained by setting a number of instances of the program which is to solve the problem on a given single processor, below or above which number the performance degrades. Thus, where the task to be performed is, for example, an exhaustive search for solutions to an equation with 100 starting points, the agent control program 40 will create a sufficient number of agent teams to provide 100 task agents 44, with N task agents in each team, where N indicates the optimal number of task agents per different remote computer, and the number of remote computers land hence agents teams) is 100/N = M.

Next, from the database of remote computers, the M computers with the highest usefulness index (i.e. the most powerful computers with the most available capacity) are selected as the respective starting points of the itinerary for each agent team.

Where a large number of suitably computers with roughly equivalent capacities are available, then position information (where available) for each computer is utilised, to select starting points for each itinerary which are spatially separate, and/or are relatively close to the user computer 10.

Spatial separation assists in preventing conflicts between different agent teams, and in spreading the impact of the remote computing task rather than concentrating it on one geographical (and hence, probably, business) area.

The agent control program 40 then examines the remote computer database to determine (in the same manner) the next M most useable computers, and, from these (or where there are more than M computers of closely similar capacity available, then from this larger group) selects for each agent team a next itinerary point, by utilising location information (where available) to select a computer relatively close to the first in the itinerary concerned.

This process is repeated until a predetermined number P of computers have been selected for each itinerary.

Further, using the data from the scout agents 46, each itinerary is refined periodically, and, where necessary, chances to the itinerary are signalled to each co-ordinating agent 42. Where more powerful computers become available than those on which the teams are currently resident, the agent control program 40 signals one or more teams to move to the newly available computers.

The itinerary, in this embodiment, comprises a simple linked list of IP addresses to which the team of agents is to move in succession.

Referring now to Figure 6d, the agent monitoring step of step 170 of Figure 5 will now be discussed in greater detail.

In a step 171, the agent control program receives, from a co-ordinating agent 42, a message containing one or more items of results data from one or more task agents 44. On receipt of such a message, in step 175 the agent control program 40 updates the current result of the task, and displays the results on the GUI.

For example, where the task is to perform a search for a solution to an equation, the current best result from any of the task agents 44 is displayed on the GUI.

If the task includes an end condition (for example, the production of plain text from a decryption task, or the achieving of a predetermined level of convergence in an equation solving task) the control program 40 determines whether that condition has been met and, or so, terminates (step 190 discussed below).

The agent control program 40 detects, in step 172, any messages from coordinating agents 42 or scout agents 46, indicating that they or any task agents 44 have moved location, and (step 176) updates the agent registry record for the agent concerned, to indicate the IP address of the computer 30 on which the agent will be resident.

In step 173, the agent control program 40 detects, from the co-ordinating agents 42, any message indicating the creation or destruction of a task agent or co-ordinating agent, and records this in the registry in step 176.

In step 174, the agent control program 40 detects any return of an agent to the user computer 10 and updates the registry record for that agent in step 176 to record the new location of the agent. It then interrogates the agent to read any result data it is carrying, and updates the task in step 175 as discussed above.

In step 190, referring to Figure 6e, where the desired result has been achieved, or for some other reason (such as non-availability of computing resources), control program 40 outputs the results of the task in step 192 (e.g. to a file stored on a hard disk), then sends a signal to each co-ordinating agent 42 to terminate itself and its task agents, and to each scout agent 46 to terminate itself in step 194. In step 196, the agent platforms 326 are removed from those remote computers 30 on which they were installed, by creating a Telnet session (as described in Figure 6b). Finally, the agent program 40 ceases execution.

In broad terms, therefore, it will be seen that the agent control program performs the following functions:
1. Creating new mobile agent platforms 326 initially, and removing these at the end of the session. (These operations could also be carried out during a task, where the agent control program 40 detects a new computer, or an existing computer becomes unusable.)
2. Sending out scout agent programs 46 to each remote computer 30, and monitoring the data received from each, to maintain a model of the distributed computing environment. This activity is performed continually during the task, and constitutes one execution thread of the agent control program 40.
3. Monitoring and controlling the positions and movements of agents. This constitutes another execution thread of the agent control program 40.
4. Receiving and, to some degree, utilising the results forwarded by the task agents. This constitutes a third thread of execution of the agent control program.
5. Analysing available resources to construct an initial itinerary of remote computers 30 for each agent team. This analysis process therefore constitutes another thread of execution of the agent control program.
6. Maintaining and dynamically updating display showing the geographical positions of the remote computers 30, the agent teams resident thereon, and, preferably, the capabilities of each computer 30, together with a display of the results of the task so far. The display is in the form of a graphical user interface, via which a user may control elements of the operation of the process (for example to move a team, create or remove a team).

Result data and monitoring data from the agents may be returned to the agent control program 40 as described above either by messages signalled back via the telecommunications network 20, or by the return of the agent concerned, followed by its interrogation locally.

The former method is more advantageous where results or monitor data are generated relatively frequently, since it is faster merely to signal the result data than to move the code for the agent. The latter is preferable where monitoring data is required relatively infrequently, since it removes the scout agent program 46 from the memory of the remote computer 30, thus reducing the intrusiveness of the remote computing process into the remote computers 30 themselves. In this embodiment, the latter method is generally preferred for this reason.

### OPERATION OF SCOUT AGENT PROGRAM 46

Referring to Figure 7, on arriving at a remote computer 30, in step 202 the scout agent program reads the computer status. Accordingly, the scout agent program 46 performs the following tests:
1. Operating system type and version (performed by executing a call to a standard routine within the JAVA virtual machine 324).
2. JAVA version number (obtained by executing a call to the JAVA virtual machine 324).
3. Total memory 32 and free memory. These are likewise obtained by executing calls to the JAVA platform.
4. Keyboard activity sensing. This is triggered whenever the operating system detects an event caused by user manipulation of the keyboard 35 (or other input device such as mouse). Other input streams (for example LAN ports) may also be monitored.
5. CPU activity. This is monitored by the following process:
   a) Start a maximum priority execution thread for a short time, recording an integer count of number of executions.
   b) Start a minimum priority thread and take another count reading.
   c) Message the impact of the second thread on the first. The busier the CPU 31, the greater the effect.

The scout agent 46 determines whether the operating system 321 is that of a portable computer or a desktop computer. If a portable computer is detected, the battery lifetime, hard disk 33 status and display 34 status are preferably detected and monitored.

Where (step 204) a status change is recorded, in step 206 it is signalled back to the agent control program 40. Alternatively, as discussed above, the scout program 46 could move back to the user computer 10.

Within another execution thread, the scout agent 46 receives messages (step 208) from the agent control program 40. If (step 210) the message constitutes an instruction to the scout agent to terminate, then in step 212 it does so. If (step 210) it constitutes an instruction to move to a new computer, then in step 214 the scout agent 46 does so. Both the move and terminate methods are provided within the Voyager agent system used in this embodiment.

In this embodiment, each scout agent 46 has a limited, predetermined lifetime and will also invoke step 212 to terminate itself if it has not received a message from the agent control program 40 within this determined time period.

Finally, the scout agent is preferably arranged to indicate its presence on the remote computer 30, by displaying an image on the VDU 34 thereof (e.g. an icon announcing its presence).

### OPERATION OF CO-ORDINATING AGENT 42

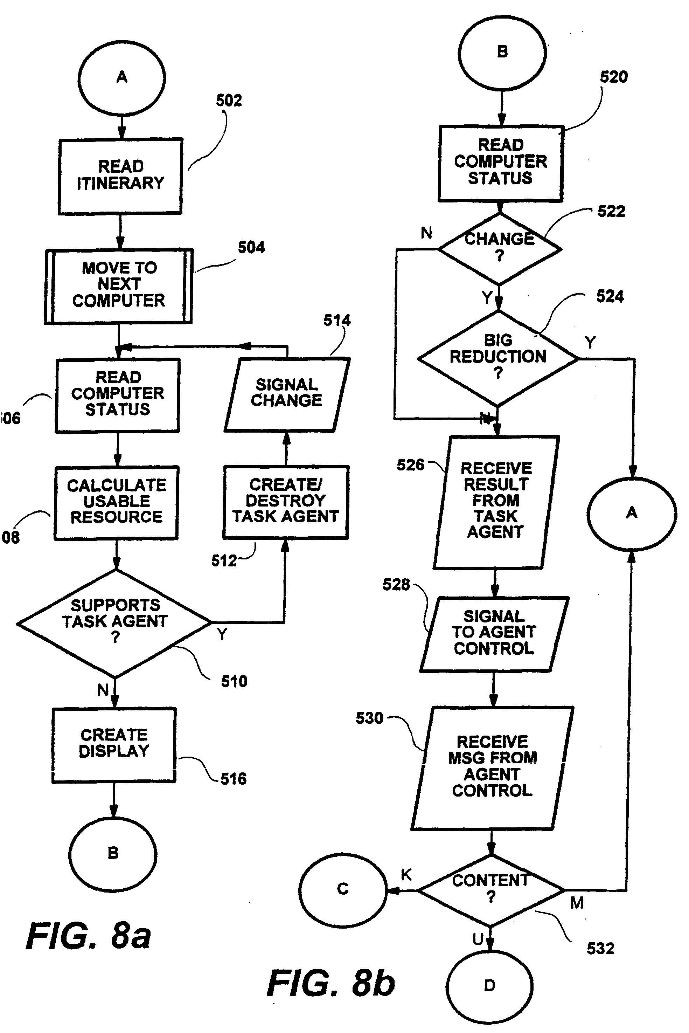

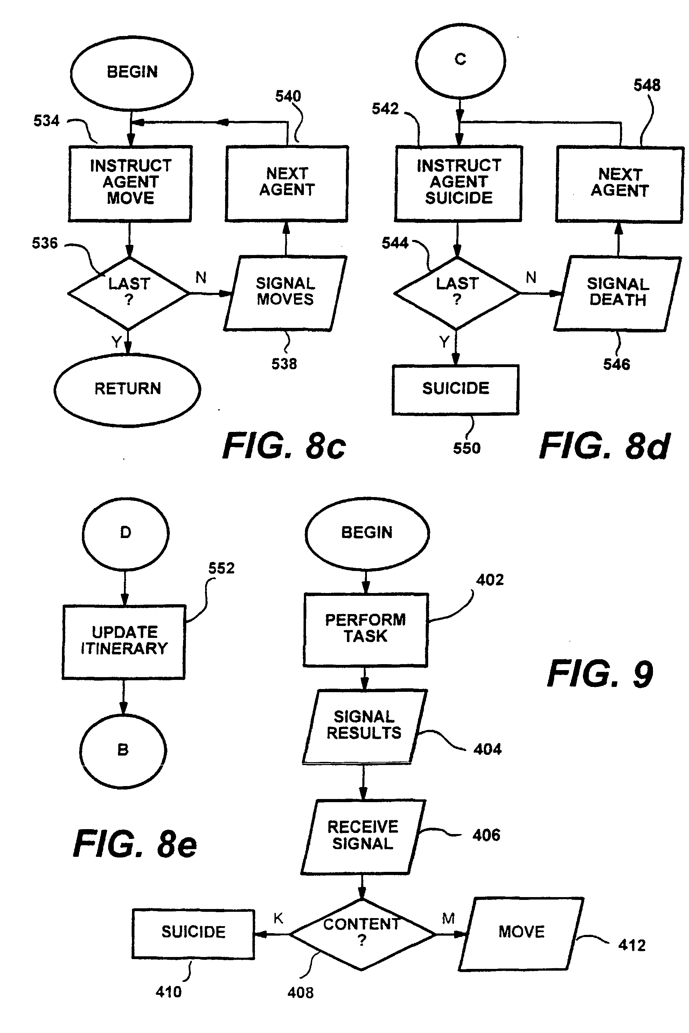

Referring to Figure 8, the operation of the co-ordinating agent 42 will now be described.

On creation, the co-ordinating agent 42 is arranged (step 502) to read its stored copy of its itinerary, and determine the next remote computer in the itinerary. On creation, naturally, this will be the first in the itinerary.

In a step 504, the co-ordinating agent 42 moves its team as described below with reference to Figure 8c.

In step 506, the co-ordinate agent 42 reads the status of the computer on which it has arrived. In this embodiment, the status checks performed are the same as those performed by the scout agent 46, and are implemented by the same code.

In step 508, the co-ordinating agent 42 determines how much of the available capacity should be utilised, based on the free memory and CPU utilisation data derived in the preceding step. In general, the co-ordinating agent 42 leaves some free memory and CPU time, in case the user of the remote computer 30 wishes to carry out some other task at the same time. For example, up to (say) 30% of the memory may be allocated as free by the co-ordinating agent 42.

In step 510 the co-ordinating agent 42 determines whether the remaining capacity, over that which is to be left free, will support an additional task agent 44 in execution or whether, to achieve the necessary amount of free space, a task agent 44 must be terminated. In step 512, if there is sufficient additional space to accommodate an additional task agent, then an additional task agent 44 is created; if it is necessary to reduce the number of task agents, then one is terminated as will be described in greater detail below. In either case the creation or destruction if an agent is signalled in step 514 to the agent control program 40. The process is then repeated at step 506 until as many task agents 44 as required, or as can be supported on the remote computer 30, have been created.

Then, in step 516, the co-ordinating agent 42 creates a display on the VDU 34 remote computer 30, indicating its presence and the presence of the task agents 44.

During operation of the co-ordinating agent 42, it monitors the computer 30 (step 520). In the event of a change (step 522) the result is reported to the agent control program 40. If the change is significant (step 524), such as the user manipulating the keyboard 35, or a high-priority task starting on the CPU 31, then the co-ordinating agent 42 initiates a move, by passing back to step 502.

The monitoring of the activity of the computer 30 constitutes one thread of execution of the co-ordinating agent 42.

As another thread of execution, the co-ordinating agent 42 detects messages from the task agents passing on results (step 526), and signals these on to the agent control program 40 (step 528). In this embodiment, rather than forwarding all results immediately, some collation of results is performed by the coordinating agent 42. To reduce the number of separate signals, and hence the addressing overhead, groups of result data are combined into a single message for forwarding.

In step 530, the co-ordinating agent 42 checks for messages from the agent control program 40, which are interpreted according to their content (step 532). If the message is to update the itinerary, then, referring to Figure 8e, the new IP addresses of the computers concerned are substituted within the itinerary in step 552.

If the signal is to move the team of agents, the co-ordinating program 42 returns to step 502. Referring to Figure 8c, after determining the next address in the itinerary in step 502, step 504 is performed comprising for each task agent, sending that task agent an instructions to move itself to that address (step 534) and, unless the last agent has been processed, signalling the move (step 538) back to the agent control program 40 and selecting the next agent (step 540). After processing the last task agent 44, the co-ordinating agent 42 moves itself (step 504).

Referring to Figure 8d, likewise, when the team of agents is to be terminated, each task agent 44 is sent a message step (542) to terminate itself and the termination is report (step 546) to the agent control program 40, following which (step 550) the co-ordinating agent 42 terminates itself.

Thus, the co-ordinating agent 42 provides, on each remote computer 30, a central control facility for monitoring machine state, initiating a move where necessary; and co-ordinating communications between the agent control program 40 and the task agents 44.

By providing a single control function for the multiple task agents 44, the complexity of each is reduced and the volume of signalling across the telecommunications network 20 is reduced.

By providing that the decision on when to move to a new remote computer is taken locally based on local monitoring, a faster response to the computer state is obtained. Thus, when a user of the remote computer 30 wishes to use the machine, it is not necessary to await the results of a signalling process with the remotely located agent control program 40 before the remote computer 30 can be freed of mobile agent programs.

Each network co-ordinating agent 42 is, essentially, standardised within its structure, since it controls the movement and communications functions of the team but does not, in this embodiment, take part in performing the task itself.

In this embodiment, to prevent remote computers 30 becoming cluttered with unwanted task agents 44 in the event of some failure of the co-ordinating agent 42 to operate, the task agent 44 is given only a limited life span and will terminate itself unless it receives a message from the co-ordinating agent 42 within this life span. The co-ordinating agent 42 is arranged to send such messages periodically, at intervals less than the life span concerned. Thus, where the co-ordinating agent 42 has moved the team to another remote computer 30, or has terminated itself, the task agents 44 will terminate.

### OPERATION OF THE TASK AGENT 44

Each task agent 44 consists of two parts; a generic part and task-specific part. The generic part consists of a Voyager mobile agent arranged, as indicated above, to terminated itself after a predetermined time unless it receives signals from the co-ordinating agent 42; to await signals from the co-ordinating agent 42 and act upon them to move or terminate itself; and to pass on results to the coordinating agent 42.

The task specific part is arranged to perform a repetitive computing task such as equation solving, decryption or string searching, and, periodically or on satisfying a task condition, to generate a result which is supplied for forwarding to the co-ordinating agent 42.

Accordingly, referring to Figure 9, step 402 comprises a performing the task; step 404 comprises signalling the results thereof to the co-ordinating agent 42; step 406 comprises receiving a signal from the co-ordinating unit 42 and (step 408) in dependence on its contents, terminating (step 410) or moving (step 412) as appropriate. These steps are, as indicated above, arranged into two repeatedly executing threads.

The co-ordinating agents 42 includes a method for creating a new task agent, from a stored task agent class, the generic part of which is stored as part of the network co-ordinating agent and the task specific part of which is supplied initially by the agent control program 40.

Where not described in detail, it will be understood that aspects of the Voyager system provide functionality for implementing the invention. For example, termination is performed in this embodiment using the voyager dieNow() function, and movement is performed by the voyager MoveTo("placename") function.

### POSSIBLE APPLICATIONS

The following is a non-exhaustive list of possible applications of the invention:
1. Parallel processing (e.g. genetic algorithms, solution searches).
2. Cryptography, distributed key cracking.
3. Speech processing.
4. Searching remote computers.
5. Distributed real-time control (for example, of mobile robots).
6. Graphics; 3D rendering.
7. Utilising mobile computer resources.

### MOBILE REMOTE COMPUTERS

Preferably, in this embodiment, the co-ordinating agent 42 is arranged to monitor the communications port 37, and when the port ceases to be connected with the telecommunications network, is arranged to buffer all results received from the task agents 44.

On the next occasion the telecommunications network 20 becomes available, the co-ordinating agent 42 signals to the agent control program 20 the results and any monitor data obtained since the network became unavailable last. Similarly, at the agent control program 20, all messages sent to the team of agents since the last message received therefrom are buffered, and are re-transmitted through the telecommunications network are next receiving a message therefrom.

Thus, this embodiment of the invention is able to send an agent team onto a mobile computer, and to make use of the resources of the mobile computer whilst it is out of communication with the telecommunications network 20, collecting the results when it next becomes available.

### OTHER EMBODIMENTS AND MODIFICATIONS

In the foregoing, the operation of the scout agent in reporting the level of usage of the remote computer is described. It is also envisaged that the scout agent would evaluate the state of the remote computer by monitoring local events to check if the keyboard is being pressed, and by recording whether the amount of free memory is static, rising, or falling. It may report changes in the amount of usage at the remote machine, rather than the actual level of usage.

The agent control program may be arranged to monitor the historical activity of different remote computers (and, where different users of the remote computers are known, the activity pattern of each user), and to use this to create the itinerary for each agent program, to ensure that agents are not sent to computers which are currently available but which will become busy soon.

By default, where usage information is not available, knowledge of the time zone in which the computer is located may be used to, for example, predict that the computer is more likely to be available during nocturnal hours in that time zone.

Where an agent team of programs is located on a remote computer and activity on that computer begins, instead of moving the team of programs to another computer, the agent co-ordinating program or the co-ordinating agent may decide to suspend operation of the agent programs temporarily but leave them on the remote computer. This will be appropriate where, for example, monitoring of the historical activity of that remote computer suggests that usage will be only for brief periods so that the computer will become usable shortly by the agent team.

Although the task agent programs have been described as acting independently on the remote computer, in embodiments it may be preferred to permit these programs to access resources on the remote computer only through the co-ordinating agent. Thus, the co-ordinating agent will have access to operating system routines for reading or writing disks or allocating memory, which routines will be called by the task agent programs.

In such embodiments, the co-ordinating agent is arranged to perform security checks, for example to ensure that individual task agents can only modify files which they themselves created. Security of this nature may be arranged by each task agent communicating a request signal to the co-ordinating agent using an exchange of keys, so that "virus" programs cannot be introduced onto a remote computer which is programmed to accept a team of task agents.

Additionally, each task agent may identify the task which it is performing when it requests access to system resources. This will enable the co-ordinating agent to determine whether tasks of that nature (for example, for a given identified user) are permitted to be performed on a given remote machine on which the task agents are resident.

In the light of the foregoing, many other alternatives, variants or modifications will be apparent to the skilled person. For example, agent platforms other than the above described Voyager platform may be used. Equally aspects of the invention do not require "agent" technology, however that term is defined for their implementation.

Although the agent control program 20 has been described as a static program on the user computer 10, it will be possible to enable it to move to another computer where desired. Although the scout agent programs 46 are described as mobile agents, it would be possible to provide static monitoring within the agent platform, although at the cost of more permanent occupation of the resources on the remote computer.

Whereas the foregoing embodiment describes multiple similar task agent programs for parallel execution, it will be understood that diverse different types could be provided. For example, for a remote control application, different parts of a complex mechanism such as a spacecraft could be controlled each by a different parallel monitoring program, all co-ordinated by a co-ordinating program.

Accordingly, the invention will be understood not to be limited to the preceding embodiments but to extend to any other modifications or variations which will be apparent to the skilled reader. Protection is sought for any and all novel subject matter or combination thereof described herein.

## Claims

1. A remote computing system comprising:
a first computer (10); and
at least one second computer (30) coupled thereto via a communications link (20);
said first computer (10) being programmed to transmit, to said second computer (30) via said link (20), data defining a computing team for performing a computing task;
said team comprising a first program (42) and at least one second program (44) different to said first program and for execution on the same computer and in parallel therewith; and said second computer (30) being programmed to receive said data and to execute, in parallel, said first and said at least one second program. (42, 44), **characterised in that**
the or each said second program (44) comprises code for performing at least a part of said task, and for communicating with said first program (42); and said first program (42) is a coordinating program comprising code for communicating with said first computer (10), and for communicating with and coordinating each said second program (44).

2. A system according to claim 1, in which said first program comprises code for transmitting said first program to another said computer, in response to a predetermined criterion.

3. A system according to claim 2, in which said first program is arranged to determine one of a plurality of said computers to move to.

4. A system according to claim 3, in which said first program is arranged to store a sequence defining an order of preference of said computers to move to.

5. A system according to any preceding claim, in which said first program comprises monitoring code for monitoring the status of said second computer.

6. A system according to claim 5 when appended to claim 2, in which said predetermined criterion comprises a reduction in computing capacity of said second computer.

7. A system according to claim 5, in which said first program is arranged to control the or each said second program in dependence upon said monitoring.

8. A system according to claim 7, in which the first program is arranged to control the number of said second programs in dependence upon said monitoring.

9. A system according to any preceding claim, in which said second program comprises code for transmitting said first program to another said computer, in response to a move instruction from said first program, and said first program is arranged to transmit a said move instruction.

10. A system according to claim 9 when appended to claim 2, in which said first program is. arranged to transmit a said move instruction in response to said monitoring.

11. A system according to any preceding claim, in which the first program is arranged to be capable of removing the or each said second program from the second computer and to terminate execution thereof.

12. A system according to claim 11, in which the second programs each comprise code for causing the second computer to remove and terminate themselves, and are arranged to do so in the absence of a signal from the first program under predetermined conditions.

13. A system according to any preceding claim, in which the first computer is programmed to access plural said second computers; to determine, for each, whether it will support said computing team and, where a second computer will not support a said team, to transmit thereto, and cause to execute thereon, a support program to adapt said second computer to support said teams.

14. A system according to any preceding claim, in which the first computer is programmed to transmit, to a plurality of said second computers via said link, data defining a monitoring program comprising monitoring code for monitoring a respective said second computer, and code for communicating with said first computer; and said first computer is arranged to receive status data from the or each said monitoring program and to control the operation of said the or each said team in dependence thereon.

15. A system according to claim 14 when appended to claim 3 or claim 4, in which the first computer is arranged to signal computer selection data to a said first program in dependence upon said monitoring data.

16. A system according to claim 3 or claim 14, in which said monitoring code is for monitoring the memory of said second computer.

17. A system according to claim 3 or claim 14, in which said monitoring code is for monitoring the utilisation of the processor of said second computer.

18. A system according to claim 3 or claim 14, in which said monitoring code is for monitoring the storage capacity of said second computer.

19. A system according to claim 3 or claim 14, in which said monitoring code is for monitoring use of an input device of said second computer.

20. A system according to claim 3 or claim 14, in which said monitoring code is for monitoring a battery of said second computer.

21. A remote computing system acording to any of claims 1 to 20 in which the first computer is further arranged to determine whether a said second computer can support execution of a said mobile program and, if not, is arranged to transmit, to said second computer via said link, and to cause execution thereon, of data defining a mobile program support environment to enable said second computer to receive said mobile program data and to execute said mobile program.

22. A system according to claim 21, in which said first computer is arranged to be capable of causing said second computer to remove said mobile program support environment.

23. A remote computing system according to any of claims 1 to 22 in which the first computer is further arranged to generate a graphical display showing the or each said second computer, and the or each said mobile program resident thereon.

24. A system according to claim 23, in which the graphical display indicates the geographical positions of said second computers.

25. A system according to claim 23, in which the graphical display indicates the computing capabilities of said second computers.

26. A system according to claim 23, in which the graphical display indicates the delay in communicating with said second computers from said first.

27. A system according to claim 23, in which said first computer is arranged to cause a display on the or each said second computer indicating the presence of said mobile program thereon.

28. A first computer adapted to operate in the system of any preceding claim.

29. A method of remote computing comprising supplying a plurality of parallel processing task programs (44) from a first computer (10) to at least one second computer (30) **characterised by** a coordinating program (42) supplied from said first computer (10) to said second computer (30); and coordinating operation of the task programs through the execution of said coordinating program (42), in parallel with the execution of said plurality of parallel processing tank programs, said coordinating program communicating with said plurality of parallel processing tank programs and with said first computer.

## Patentansprüche

1. Ferndatenverarbeitungssystem, das umfaßt:
einen ersten Computer (10); und
wenigstens einen zweiten Computer (30), der daran über eine Kommunikationsverbindung (20) angeschlossen ist;
wobei der erste Computer (10) so programmiert ist, daß er an den zweiten Computer (30) über die Verbindung (20) Daten überträgt, die ein Rechen-Team für die Ausführung einer Rechenaufgabe definieren;
wobei das Team ein erstes Programm (42) und wenigstens ein von dem ersten Programm verschiedenes zweites Programm (44) umfaßt, die auf demselben Computer parallel ausgeführt werden; und wobei der zweite Computer (30) so programmiert ist, daß er die Daten empfängt und das erste und das wenigstens eine zweite Programm (42, 44) parallel ausführt, **dadurch gekennzeichnet, daß**
das oder jedes zweite Programm (44) einen Code für die Ausführung wenigstens eines Teils der Aufgabe und für die Kommunikation mit dem ersten Programm (42) umfaßt; und das erste Programm (42) ein Koordinationsprogramm ist, das einen Code für die Kommunikation mit dem ersten Computer (10) und für die Kommunikation mit jedem zweiten Programm (44) und für dessen Koordination umfaßt.

2. System nach Anspruch 1, bei dem das erste Programm einen Code zum Übertragen des ersten Programms an einen weiteren solchen Computer in Reaktion auf ein vorgegebenes Kriterium umfaßt.

3. System nach Anspruch 2, bei dem das erste Programm so beschaffen ist, daß es einen der mehreren Computer bestimmt, zu dem es sich bewegt.

4. System nach Anspruch 3, bei dem das erste Programm so beschaffen ist, daß es eine Folge speichert, die eine Präferenzreihenfolge der Computer, zu denen es sich bewegt, definiert.

5. System nach einem vorhergehenden Anspruch, bei dem das erste Programm einen Überwachungscode zum Überwachen des Status des zweiten Computers umfaßt.

6. System nach Anspruch 5 wenn abhängig von Anspruch 2, bei dem das vorgegebene Kriterium eine Verringerung der Rechenkapazität des zweiten Computers ist.

7. System nach Anspruch 5, bei dem das erste Programm so beschaffen ist, daß es das oder jedes zweite Programm in Abhängigkeit von der Überwachung steuert.

8. System nach Anspruch 7, bei dem das erste Programm so beschaffen ist, daß es die Anzahl der zweiten Programme in Abhängigkeit von der Überwachung steuert.

9. System nach einem vorhergehenden Anspruch, bei dem das zweite Programm einen Code zum Übertragen des ersten Programms an einen weiteren solchen Computer in Reaktion auf einen Bewegungsbefehl vom ersten Programm umfaßt, wobei das erste Programm so beschaffen ist, daß es einen solchen Bewegungsbefehl überträgt.

10. System nach Anspruch 9, wenn abhängig von Anspruch 2, bei dem das erste Programm so beschaffen ist, daß es einen solchen Bewegungsbefehl in Reaktion auf die Überwachung überträgt.

11. System nach einem vorhergehenden Anspruch, bei dem das erste Programm so beschaffen ist, daß es das oder jedes zweite Programm von dem zweiten Computer entfernen und seine Ausführung beenden kann.

12. System nach Anspruch 11, bei dem die zweiten Programme jeweils einen Code umfassen, um den zweiten Computer dazu zu veranlassen, sie zu entfernen und zu beenden, und so beschaffen sind, daß sie dies bei Abwesenheit eines Signals vom ersten Programm unter vorgegebenen Bedingungen tun.

13. System nach einem vorhergehenden Anspruch, bei dem der erste Computer so programmiert ist, daß er auf mehrere zweite Computer zugreift; für jeden hiervon bestimmt, ob er das Computer-Team unterstützt, und in dem Fall, in dem ein zweiter Computer das Team nicht unterstützt, an diesen ein Support-Programm überträgt und dessen Ausführung darauf veranlaßt, um den zweiten Computer für die Unterstützung der Teams geeignet zu machen.

14. System nach einem vorhergehenden Anspruch, bei dem der erste Computer so programmiert ist, daß er an mehrere der zweiten Computer über die Verbindung Daten überträgt, die ein Überwachungsprogramm definieren, das einen Überwachungscode zum Überwachen eines entsprechenden der zweiten Computer und einen Code für die Kommunikation mit dem ersten Computer enthält; und der erste Computer so beschaffen ist, daß er Statusdaten von dem oder jedem Überwachungsprogramm empfängt und die Operation des oder jedes Teams in Abhängigkeit hiervon steuert.

15. System nach Anspruch 14, wenn abhängig von Anspruch 3 oder Anspruch 4, bei dem der erste Computer so beschaffen ist, daß er in Abhängigkeit von den Überwachungsdaten Computerauswahldaten an das erste Programm übermittelt.

16. System nach Anspruch 3 oder Anspruch 14, bei dem der Überwachungscode der Überwachung des Speichers des zweiten Computers dient.

17. System nach Anspruch 3 oder Anspruch 14, bei dem der Überwachungscode der Überwachung der Nutzung des Prozessors des zweiten Computers dient.

18. System nach Anspruch 3 oder Anspruch 14, bei dem der Überwachungscode der Überwachung der Speicherkapazität des zweiten Computers dient.

19. System nach Anspruch 3 oder Anspruch 14, bei dem der Überwachungscode der Überwachung der Nutzung einer Eingabevvrrichtung des zweiten Computers dient.

20. System nach Anspruch 3 oder Anspruch 14, bei dem der Überwachungscode der Überwachung einer Batterie des zweiten Computers dient.

21. Ferndatenverarbeitungssystem nach einem der Ansprüche 1 bis 20, bei dem der erste Computer ferner so beschaffen ist, daß er feststellt, ob der zweite Computer die Ausführung eines solchen mobilen Programms unterstützen kann und, falls nicht, so beschaffen ist, daß er an den zweiten Computer über die Verbindung Daten überträgt, die eine Supportumgebung für das mobile Programm definieren, die den zweiten Computer in die Lage versetzt, die Daten des mobilen Programms zu empfangen und das mobile Programm auszuführen, und deren Ausführung auf dem zweiten Computer veranlaßt.

22. System nach Anspruch 21, bei dem der erste Computer so beschaffen ist, daß er den zweiten Computer dazu veranlassen kann, die Support-Umgebung für das mobile Programm zu entfernen.

23. Ferndatenverarbeitungssystem nach einem der Ansprüche 1 bis 22, bei dem der erste Computer ferner so beschaffen ist, daß er eine graphische Anzeige erzeugt, die den oder jeden zweiten Computer und das oder jedes mobile Programm, die darauf resident vorhanden sind, zeigt.

24. System nach Anspruch 23, bei dem die graphische Anzeige die geographischen Positionen der zweiten Computer angibt.

25. System nach Anspruch 23, bei dem die graphische Anzeige die Rechenkapazitäten der zweiten Computer angibt.

26. System nach Anspruch 23, bei dem die graphische Anzeige die Verzögerung der Kommunikation von dem ersten zu den zweiten Computern angibt.

27. System nach Anspruch 23, bei dem der erste Computer so beschaffen ist, daß er eine Anzeige auf dem oder jedem zweiten Computer, die das Vorhandensein des mobilen Programms darauf angibt, bewirkt.

28. Erster Computer, der so beschaffen ist, daß er in dem System nach einem vorhergehenden Anspruch arbeitet.

29. Ferndatenverarbeitungsverfahren, das das Liefern mehrerer paralleler Verarbeitungsaufgaben-Programme von einem ersten Computer (10) zu wenigstens einem zweiten Computer (30) umfaßt, **gekennzeichnet durch** ein Koordinierungsprogramm (42), das von dem ersten Computer (10) zu dem zweiten Computer (30) geliefert wird und die Operation für die Aufgaben-Programme **durch** die Ausführung des Koordinierungsprogramms (42) parallel zu der Ausführung der mehreren parallel verarbeiteten Aufgaben-Programme koordiniert, wobei das Koordinierungsprogramm mit den mehreren parallel verarbeiteten Aufgaben-Programmen und mit dem ersten Computer kommuniziert.

## Revendications

1. Système de traitement à distance comprenant :
un premier ordinateur (10), et
au moins un second ordinateur (30) relié à celui-ci par l'intermédiaire d'une liaison de communications (20),
ledit premier ordinateur (10) étant programmé pour transmettre audit second ordinateur (30) par l'intermédiaire de ladite liaison (20), des données définissant une équipe de traitement pour exécuter une tâche de traitement,
ladite équipe comprenant un premier programme (42) et au moins un second programme (44) différent dudit premier programme, et en vue d'une exécution sur le même ordinateur et en parallèle avec celui-ci, et ledit second ordinateur (30) étant programmé pour recevoir lesdites données et pour exécuter, en parallèle, ledit premier et ledit au moins un second programme (42, 44), **caractérisé en ce que**
le ou chaque dit second programme (44) comprend un code pour exécuter au moins une partie de ladite tâche, et pour communiquer avec ledit premier programme, (42), et ledit premier programme (42) est un programme de coordination comprenant un code pour communiquer avec ledit premier ordinateur (10), et pour communiquer avec chaque dit second programme (44) et coordonner celui-ci.

2. Système selon la revendication 1, dans lequel ledit premier programme comprend un code destiné à transmettre ledit premier programme à un autre dit ordinateur, en réponse à un critère prédéterminé.

3. Système selon la revendication 2, dans lequel ledit premier programme est agencé afin de déterminer un ordinateur d'une pluralité de dits ordinateurs vers lequel se déplacer.

4. Système selon la revendication 3, dans lequel ledit premier programme est agencé afin de mémoriser une séquence définissant un ordre de préférence desdits ordinateurs vers lesquels se déplacer.

5. Système selon l'une quelconque des revendications précédentes, dans lequel ledit premier programme comprend un code de surveillance destiné à surveiller l'état dudit second ordinateur.

6. Système selon la revendication 5, lorsque annexée à la revendication 2, dans lequel ledit critère prédéterminé comprend une réduction de capacité de traitement dudit second ordinateur.

7. Système selon la revendication 5, dans lequel ledit premier programme est agencé afin de commander le ou chaque dit second programme en fonction de ladite surveillance.

8. Système selon la revendication dans lequel le premier programme est agencé afin de commander le nombre de dits seconds programmes en fonction de ladite surveillance.

9. Système selon l'une quelconque des revendications précédentes, dans lequel ledit second programme comprend un code destiné à transmettre ledit premier programme à un autre dit ordinateur, en réponse à un ordre de déplacement dudit premier programme, et ledit, premier programme est agencé afin de transmettre un dit ordre de déplacement.

10. Système selon la revendication 9 lorsque annexée à la revendication 2, dans lequel ledit premier programme est agencé afin de transmettre un dit ordre de déplacement en réponse à ladite surveillance.

11. Système selon l'une quelconque des revendications précédentes, dans lequel le premier programme est agencé pour pouvoir supprimer le ou chaque dit second programme du second ordinateur, et pour terminer l'exécution de celui-ci.

12. Système selon la revendication 11, dans lequel les seconds programmes comprennent chacun un code destiné à amener le second ordinateur à les supprimer et à désactiver eux-mêmes, et sont agencés pour en faire ainsi en l'absence d'un signal du premier programme dans des conditions prédéterminées.

13. Système selon l'une quelconque des revendications précédentes, dans lequel le premier ordinateur est programmé pour accéder à une pluralité de dits seconds ordinateurs, afin de définir, pour chacun, s'il supportera ladite équipe de traitement et, lorsqu'un second ordinateur ne supportera pas une dite équipe, à transmettre à celui-ci, et à amener à exécuter sur celui-ci un programme d'assistance destiné à adapter ledit second ordinateur à supporter lesdites équipes.

14. Système selon l'une quelconque des revendications précédentes, dans lequel le premier ordinateur est programmé pour transmettre à une pluralité de dits seconds ordinateurs par l'intermédiaire de ladite liaison, des données définissant un programme de surveillance comprenant un code de surveillance destiné à surveiller un dit second ordinateur respectif,et un code destiné à communiquer avec ledit premier ordinateur, et ledit premier ordinateur est agencé pour recevoir des données d'état du ou de chaque dit programme de surveillance, et pour commander le fonctionnement de ladite ou de chaque dite équipe dépendant de celui-ci.

15. Système selon la revendication 14, lorsque annexée à la revendication 3 ou à la revendication 4, dans lequel le premier ordinateur est agencé pour signaler des données de sélection d'ordinateur à un dit premier programme dépendant desdites données de surveillance.

16. Système selon la revendication 3 ou la revendication 14, dans lequel ledit code de surveillance est destiné à surveiller la mémoire dudit second ordinateur.

17. Système selon la revendication 3 ou la revendication 14, dans lequel ledit code de surveillance est destiné à surveiller l'utilisation du processeur dudit second ordinateur.

18. Système selon la revendication 3 ou la revendication 14, dans lequel ledit code de surveillance est destiné à surveiller la capacité de mémorisation dudit second ordinateur.

19. Système selon la revendication 3 ou la revendication 14, dans lequel ledit code de surveillance est destiné à surveiller l'utilisation d'un dispositif d'entrée dudit second ordinateur.

20. Système selon la revendication 3 ou la revendication 14, dans lequel ledit code de surveillance est destiné à surveiller une batterie dudit, second ordinateur.

21. Système de traitement à distance selon l'une quelconque des revendications 1 à 20, dans lequel le premier ordinateur est en outre agencé pour définir si un dit second ordinateur peut supporter l'exécution d'un dit programme mobile et, si non, il est agencé pour transmettre audit second ordinateur par l'intermédiaire de ladite liaison, et pour amener l'exécution sur celui-ci, de données définissant un environnement de prise en charge de programme mobile afin d'autoriser ledit second ordinateur à recevoir lesdites données de programme mobile, et à exécuter ledit programme mobile.

22. Système selon la revendication 21, dans lequel ledit premier ordinateur est agencé de façon à pouvoir amener ledit second ordinateur à supprimer ledit environnement de prise en charge de programme mobile.

23. Système de traitement à distance selon l'une quelconque des revendications 1 à 22, dans lequel le premier ordinateur est de plus agencé pour générer un système d'affichage graphique représentant le ou chaque dit second ordinateur, et le ou chaque dit programme mobile résident sur celui-ci.

24. Système selon la revendication 23, dans lequel le système d'affichage graphique indique les positions géographiques desdits seconds ordinateurs.

25. Système selon la revendication 23, dans lequel le système d'affichage graphique indique les possibilités de calcul desdits seconds ordinateurs.

26. Système selon la revendication 23, dans lequel le système d'affichage graphique indique le délai de communication avec lesdits seconds ordinateurs à partir dudit premier.

27. Système selon la revendication 23, dans lequel ledit dit premier ordinateur est agencé pour générer un affichage du ou de chaque second ordinateur indiquant la présence dudit programme mobile sur celui-ci.

28. Premier ordinateur conçu pour fonctionner dans le système de l'une quelconque des revendications précédentes.

29. Procédé de traitement à distance comprenant la fourniture d'une pluralité de programmes de tâches de traitement parallèle (44) depuis un premier ordinateur (10) vers au moins un second ordinateur (30) **caractérisé par** un programme de coordination (42) fourni depuis ledit premier ordinateur (10) audit second ordinateur (30), et un fonctionnement de coordination des programmes de tâches par l'intermédiaire de l'exécution du programme, de coordination (42), en parallèle avec l'exécution de ladite pluralité de programmes de tâches de traitement parallèle, ledit programme de coordination communiquant avec ladite pluralité de programmes de tâches de traitement parallèle et avec ledit premier ordinateur.
